# EUROPÄISCHE PATENTSCHRIFT

(11) **EP 4 311 734 B1**
(45) Veröffentlichungstag und Bekanntmachung des Hinweises auf die Patenterteilung: **12.03.2025**
(21) Anmeldenummer: 23180815.5
(22) Anmeldetag: 22.06.2023
(51) Int. Cl.: B60T 7/04, B60T 8/88, B60T 13/66, B60T 17/22

(54) **VERFAHREN ZUM BETREIBEN EINER BREMSANLAGE FÜR EIN KRAFTFAHRZEUG SOWIE ENTSPRECHENDE BREMSANLAGE**
METHOD FOR OPERATING A BRAKE SYSTEM FOR A MOTOR VEHICLE AND CORRESPONDING BRAKE SYSTEM
PROCÉDÉ DE FONCTIONNEMENT D'UN SYSTÈME DE FREINAGE POUR UN VÉHICULE AUTOMOBILE ET SYSTÈME DE FREINAGE CORRESPONDANT

(30) Priorität: 26.07.2022 DE 102022118676
(43) Veröffentlichungstag der Anmeldung: 31.01.2024
(73) Patentinhaber: AUDI AG, 85057 Ingolstadt (DE)
(72) Erfinder: Förster, Kilian, 92339 Beilngries (DE); Müller, Frank, 85057 Ingolstadt (DE)

(56) Entgegenhaltungen:
- EP-A1- 3 031 659
- CN-A- 114 734 968
- DE-A1- 102014 015 445
- DE-A1- 102018 200 313
- FR-A1- 2 866 962

## Beschreibung

Die Erfindung betrifft ein Verfahren zum Betreiben einer Bremsanlage für ein Kraftfahrzeug, wobei die Bremsanlage eine Betriebsbremseinrichtung aufweist und ein Ansteuern der Betriebsbremseinrichtung zum Erzeugen einer Bremskraft auf eine Radachse des Kraftfahrzeugs zumindest zeitweise in Abhängigkeit von einer Einstellung eines Bedienelements erfolgt. Die Erfindung betrifft weiterhin eine Bremsanlage für ein Kraftfahrzeug.

Aus dem Stand der Technik ist beispielsweise die Druckschrift DE 11 2016 001 509 T5 bekannt. Diese beschreibt eine Bremssteuereinrichtung, die einen Bremsbefehladditionsabschnitt zum Addieren eines Automatikbremsungsbremsbefehlswerts, der von einem Automatikbremsungsbremsbefehlsberechnungsabschnitt ausgegeben wird, und eines Pedalbetätigungsbremsbefehlssatz, der von einem Pedalbetätigungsbremsbefehlsberechnungsabschnitt ausgegeben wird, umfasst. Der Pedalbetätigungsbremsbefehlsberechnungsabschnitt umfasst einen Pedalbetätigungsbremsbefehlsauswahlabschnitt, einen Normalbremsungseigenschaftsabschnitt zum Halten einer Normalbremsungseigenschaft und einen Automatikbremsungseigenschaftsabschnitt zum Halten einer Automatikbremsungseigenschaft. Der Pedalbetätigungsbremsbefehlsauswahlabschnitt wählt einen Bremsbefehlswert aus, der von dem Automatikbremsungseigenschaftsabschnitt ausgegeben wird, wenn der Automatikbremsungsbremsbefehlswert mehr als 0 beträgt, und gibt das Auswahlergebnis an den Bremsbefehladditionsabschnitt als den Pedalbetätigungsbremsbefehlswert aus.

Es ist Aufgabe der Erfindung, ein Verfahren zum Betreiben einer Bremsanlage für ein Kraftfahrzeug vorzuschlagen, welches gegenüber bekannten Verfahren Vorteile aufweist, insbesondere das Ansteuern der Betriebsbremseinrichtung auf besonders zuverlässige Art und Weise ermöglicht, auch nach einem Verbauen und/oder Austauschen eines Bedienelements der Bremsanlage.

Dies wird erfindungsgemäß mit einem Verfahren zum Betreiben einer Bremsanlage für ein Kraftfahrzeug mit den Merkmalen des Anspruchs 1 erreicht. Dabei ist vorgesehen, dass das Erzeugen der Bremskraft in Abhängigkeit von der Einstellung des Bedienelements unter Verwendung eines in einem Steuergerät der Bremsanlage hinterlegten Kalibrierdatensatzes vorgenommen wird, wobei eine in dem Bedienelement hinterlegte Kennung an das Steuergerät übertragen und dort für eine Kompatibilitätsprüfung herangezogen wird und bei erfolgreicher Kompatibilitätsprüfung ein Einrichten des Bedienelements erfolgt, indem ein in dem Steuergerät hinterlegter generischer Datensatz als Kalibrierdatensatz verwendet sowie ein in dem Bedienelement hinterlegter bedienelementspezifischer Datensatz an das Steuergerät übertragen und nach dem Übertragen als Kalibrierdatensatz verwendet wird.

Vorteilhafte Ausgestaltungen mit zweckmäßigen Weiterbildungen der Erfindung sind in den abhängigen Ansprüchen angegeben. Es wird darauf hingewiesen, dass die in der Beschreibung erläuterten Ausführungsbeispiele nicht beschränkend sind; vielmehr sind Variationen realisierbar, ohne den Rahmen der durch die Ansprüche definierten Erfindung zu verlassen.

Das Verfahren dient dem Betreiben der Bremsanlage. Diese ist vorzugsweise Bestandteil des Kraftfahrzeugs, kann jedoch selbstverständlich auch separat von diesem vorliegen. Die Bremsanlage dient einem Bremsen des Kraftfahrzeugs, also einer Reduzierung der Geschwindigkeit des Kraftfahrzeugs, insbesondere bis in den Stillstand, und/oder einem Festsetzen des Kraftfahrzeugs im Stillstand. Für ersteres weist die Bremsanlage die Betriebsbremseinrichtung auf, welche zumindest zeitweise an wenigstens einem Rad des Kraftfahrzeugs, bevorzugt an mehreren oder allen Rädern des Kraftfahrzeugs, eine Bremskraft bewirkt. Diese Bremskraft kann auch als Betriebsbremskraft bezeichnet werden.

Liegen die mehreren Räder vor, so ist das wenigstens eine Rad als Bestandteil dieser mehreren Räder anzusehen. Sofern im Rahmen dieser Beschreibung von dem Rad oder dem wenigstens einen Rad gesprochen wird, so sind die Ausführungen äquivalent. Sie sind zudem vorzugsweise auf jedes der mehreren Räder übertragbar.

Das wenigstens eine Rad ist der Radachse des Kraftfahrzeugs zugeordnet, auf welche die Bremskraft mithilfe der Betriebsbremseinrichtung aufgebracht wird. Die Radachse ist beispielsweise eine Hinterradachse oder eine Vorderradachse des Kraftfahrzeugs. Bevorzugt ist die Betriebsbremseinrichtung dazu vorgesehen und ausgestaltet, zumindest zeitweise die Bremskraft auf mehrere Räder der Radachse und/oder Räder mehrerer Radachsen aufzubringen. Besonders bevorzugt wird die Betriebsbremseinrichtung dazu verwendet, zumindest zeitweise auf mehrere oder alle Radachsen des Kraftfahrzeugs beziehungsweise deren Räder die Bremskraft aufzubringen beziehungsweise die entsprechenden Räder zu bremsen.

Die Betriebsbremseinrichtung verfügt über wenigstens eine Radbremse, welche dem wenigstens einen Rad beziehungsweise der wenigstens einen Radachse zugeordnet ist. Vorzugsweise weist die Betriebsbremseinrichtung mehrere Radbremsen auf, wobei jede der Radbremsen einem Rad beziehungsweise einer Radachse des Kraftfahrzeugs zugeordnet ist. Besonders bevorzugt liegen die Radbremsen an mehreren Rädern und/oder Radachsen vor, insbesondere ist jedem Rad und/oder jeder Radachse des Kraftfahrzeugs eine separate Radbremse zugeordnet. Mittels der Radbremse wird die Bremskraft auf die Radachse beziehungsweise das jeweilige Rad des Kraftfahrzeugs aufgebracht.

Die mittels der Betriebsbremseinrichtung bewirkte Bremskraft kann üblicherweise beliebig eingestellt werden. Dies erfolgt in Abhängigkeit von der Einstellung des Bedienelements, über welches ein Fahrer des Kraftfahrzeugs die Bremskraft vorgibt. Das Bedienelement ist aus einem Fahrgastraum des Kraftfahrzeugs heraus von dem Fahrer erreichbar angeordnet, insbesondere liegt es zumindest bereichsweise in dem Fahrgastraum vor beziehungsweise ragt in diesen hinein. Das Bedienelement ist besonders bevorzugt als Bremspedal ausgestaltet, ist also zur Betätigung durch einen Fuß des Fahrers beziehungsweise zur Fußbetätigung durch den Fahrer vorgesehen und ausgestaltet und entsprechend angeordnet.

Die Bremsanlage wertet die Einstellung des Bedienelements, beispielsweise seine Stellung, aus und ermittelt aus der Einstellung die von dem Fahrer vorgegebene Bremskraft. Diese kann auch als Vorgabebremskraft bezeichnet werden. Die Betriebsbremseinrichtung wird derart angesteuert, dass sie auf die Radachse des Kraftfahrzeugs beziehungsweise das wenigstens eine Rad die Bremskraft bewirkt, welche der Vorgabebremskraft entspricht. Insbesondere wird der Betriebsbremseinrichtung eine der Vorgabebremskraft entsprechende Sollbremskraft vorgegeben und diese stellt eine auf die Radachse beziehungsweise das wenigstens eine Rad wirkende Istbremskraft derart ein, dass sie der Sollbremskraft und mithin der Vorgabebremskraft entspricht.

Die Betriebsbremseinrichtung ist zumindest zeitweise rein elektronisch an das Bedienelement angebunden, sodass das Ansteuern der Radbremse beziehungsweise der Radbremsen in Abhängigkeit von der Einstellung des Bedienelements zumindest zeitweise rein elektronisch vorgenommen wird. Es kann jedoch vorgesehen sein, dass zwischen dem Bedienelement und der Radbremse eine mechanische und/oder hydraulische Rückfallebene vorliegt, sodass bei einem Ausfall der elektronischen Anbindung mittels des Bedienelements dennoch die Bremskraft bewirkt beziehungsweise eingestellt werden kann. Besonders bevorzugt ist jedoch das Bedienelement permanent rein elektronisch an die Betriebsbremseinrichtung angebunden beziehungsweise umgekehrt die Betriebsbremseinrichtung permanent rein elektronisch an das Bedienelement angebunden.

Das Erzeugen der Bremskraft in Abhängigkeit von der Einstellung des Bedienelements wird unter Verwendung eines in einem Steuergerät der Bremsanlage hinterlegten Kalibrierdatensatzes vorgenommen. Das bedeutet, dass die Bremskraft nicht ausschließlich von der Einstellung des Bedienelements abhängt, sondern zusätzlich von dem Kalibrierdatensatz. Insbesondere dient die Einstellung des Bedienelements als Eingangsgröße für den Kalibrierdatensatz und die Bremskraft als Ausgangsgröße. Vorzugsweise ist also vorgesehen, dass die bereits erwähnte Vorgabebremskraft unter Verwendung des Kalibrierdatensatzes aus der Einstellung des Bedienelements ermittelt wird. Die der Vorgabebremskraft entsprechende Sollbremskraft wird nachfolgend an der Betriebsbremseinrichtung eingestellt, welche die auf die Radachse des Kraftfahrzeugs wirkende Istbremskraft derart einstellt, dass sie der Sollbremskraft entspricht.

Der Kalibrierdatensatz umfasst insbesondere Informationen über das Bedienelement, insbesondere einen Zusammenhang zwischen der Einstellung des Bedienelements und der zu erzeugenden Bremskraft beziehungsweise der Vorgabebremskraft. Insbesondere setzt der Kalibrierdatensatz unterschiedliche Werte für die Einstellung des Bedienelements mit unterschiedlichen Werten für die Bremskraft beziehungsweise die Vorgabebremskraft in Beziehung. Vorzugsweise enthält der Kalibrierdatensatz für unterschiedliche Werte der Einstellung des Bedienelements jeweils einen Wert für die zu erzeugende Bremskraft. Die Werte für die zu erzeugende Bremskraft sind zumindest teilweise für unterschiedliche Werte der Einstellung voneinander verschieden.

Der Kalibrierdatensatz liegt beispielsweise in Form einer Tabelle, eines Kennfelds oder einer mathematischen Beziehung vor. Von grundsätzlicher Bedeutung ist, dass die Bremskraft beziehungsweise die Vorgabebremskraft lediglich mittelbar von der Einstellung des Bedienelements abhängt, nämlich über den Kalibrierdatensatz. Der Kalibrierdatensatz ist insoweit notwendig, um die Bremskraft aus der Einstellung des Bedienelements zu ermitteln.

Das Bedienelement ist elektrisch, vorzugsweise permanent rein elektrisch, an das Steuergerät angeschlossen und übermittelt seine Einstellung an dieses. Das Steuergerät verwendet den Kalibrierdatensatz, um für die von dem Bedienelement an das Steuergerät übermittelten Einstellung die dazugehörige Bremskraft beziehungsweise die Vorgabebremskraft zu bestimmen. Anschließend steuert das Steuergerät die Betriebsbremseinrichtung zum Erzeugen der Bremskraft an. Der Kalibrierdatensatz muss insoweit in dem Steuergerät der Bremsanlage hinterlegt sein.

Vorzugsweise ist es vorgesehen, dass in dem Bedienelement der bedienelementspezifische Datensatz hinterlegt ist. Der bedienelementspezifische Datensatz ist auf das Bedienelement abgestimmt, beispielsweise wird er bei einem Kalibrieren des Bedienelements ermittelt und in dem Bedienelement hinterlegt. Das Bedienelement verfügt hierzu über einen entsprechenden Datenspeicher. Beispielsweise wird der bedienelementspezifische Datensatz bei einer Herstellung des Bedienelements und/oder vor einem Verbau des Bedienelements in dem Kraftfahrzeug ermittelt und in dem Bedienelement hinterlegt.

Das Bedienelement übermittelt den bedienelementspezifischen Datensatz zumindest einmalig an das Steuergerät der Bremsanlage, vorzugsweise einmalig nach einem Einbau des Bedienelements in das Kraftfahrzeug. Es kann jedoch auch vorgesehen sein, dass das Bedienelement den bedienelementspezifischen Datensatz mehrfach, insbesondere periodisch, an das Steuergerät überträgt. Das Steuergerät empfängt den bedienelementspezifischen Datensatz von dem Bedienelement und verwendet ihn nach dem Übertragen als Kalibrierdatensatz. Hierbei kann es vorgesehen sein, dass lediglich der erstmalig von dem Bedienelement übertragene bedienelementspezifische Datensatz als Kalibrierdatensatz herangezogen wird. Nachfolgende Übertragungen des bedienelementspezifischen Datensatzes von dem Bedienelement an das Steuergerät werden in diesem Fall ignoriert und der verwendete Kalibrierdatensatz beibehalten, zumindest falls kein Austausch des Bedienelements festgestellt wird, also das Bedienelement unverändert ist.

Da das Übertragen des bedienelementspezifischen Datensatzes an das Steuergerät einen gewissen Zeitraum in Anspruch nimmt und während dieses Zeitraums der bedienelementspezifische Datensatz nicht als Kalibrierdatensatz zur Verfügung steht, müsste die Bremsanlage einen Fehler anzeigen und/oder das Kraftfahrzeug außer Betrieb gesetzt werden, um eine hohe Sicherheit für den Fahrer des Kraftfahrzeugs zu gewährleisten. Da dem Fahrer jedoch eine rasche Inbetriebnahme des Kraftfahrzeugs ermöglicht werden soll, ist in dem Bedienelement die Kennung hinterlegt. Diese Kennung wird an das Steuergerät übertragen und dort für eine Kompatibilitätsprüfung herangezogen. Unter der Kompatibilitätsprüfung ist zu verstehen, dass eine Prüfung daraufhin vorgenommen wird, ob das Bedienelement und sein Verhalten dem Steuergerät grundsätzlich bekannt sind.

Ist die Kompatibilitätsprüfung erfolgreich, also das Bedienelement dem Steuergerät grundsätzlich bekannt, so wird das Bedienelement für den Betrieb im Rahmen der Bremsanlage eingerichtet. Dieses Einrichten erfolgt, indem zunächst der in dem Steuergerät hinterlegte generische Datensatz als Kalibrierdatensatz verwendet wird. Gleichzeitig oder nachfolgend wird auf die bereits beschriebene Art und Weise der bedienelementspezifische Datensatz an das Steuergerät übertragen. Nach vollständigem Übertragen des bedienelementspezifischen Datensatzes beziehungsweise nach einem Abschluss des Übertragens wird von dem generischen Datensatz auf den bedienelementspezifischen Datensatz umgeschaltet, sodass nachfolgend der bedienelementspezifische Datensatz als Kalibrierdatensatz herangezogen wird und nicht mehr der generische Datensatz.

Diese Vorgehensweise ermöglicht einen sicheren und zuverlässigen Betrieb der Bremsanlage beziehungsweise des Kraftfahrzeugs noch während der bedienelementspezifische Datensatz von dem Bedienelement an das Steuergerät übertragen wird. Bereits unmittelbar nach der Inbetriebnahme des Bedienelements ist also die vollständige Funktion des Bedienelements beziehungsweise der Bremsanlage gewährleistet und der Fahrer erhält bei einer definierten Betätigung des Bedienelements die erwartete Bremskraft zumindest näherungsweise.

Der bedienelementspezifischer Datensatz unterscheidet sich vorzugsweise von dem generischen Datensatz. Der generische Datensatz wird beispielsweise anhand einer Vielzahl an gleichartigen Bedienelementen ermittelt, vorzugsweise durch Mittelung über die bedienelementspezifischen Datensätze dieser Bedienelemente. Bevorzugt wird eine Mehrzahl an Bedienelementen bereitgestellt und jedes der Bedienelemente kalibriert und hierbei jeweils ein bedienelementspezifischer Datensatz erstellt und in dem entsprechenden Bedienelement hinterlegt. Aus dieser Mehrzahl an bedienelementspezifischen Datensätzen wird nachfolgend der generische Datensatz bestimmt und in dem Steuergerät hinterlegt. Der generische Datensatz stellt also bereits eine gute Näherung des bedienelementspezifischen Datensatzes des Bedienelements dar und kann entsprechend zumindest vorübergehend als Kalibrierdatensatz verwendet werden, um das Betreiben der Bremsanlage zu ermöglichen.

Der generische Datensatz ist bevorzugt fest in dem Steuergerät hinterlegt, wird also auch durch das Übertragen des bedienelementspezifischen Datensatzes nicht verändert oder überschrieben. So ist sichergestellt, dass beispielsweise bei einem Ersetzen des Bedienelements durch ein anderes Bedienelement der generische Datensatz auch für das Betreiben der Bremsanlage mit dem anderen Bedienelement zur Verfügung steht. In anderen Worten ist der generische Datensatz bevorzugt dauerhaft fest in dem Steuergerät hinterlegt.

Die Kennung weißt bevorzugt eine kleinere Datenmenge auf als der bedienelementspezifischer Datensatz. Entsprechend wird die Kennung rascher an das Steuergerät übertragen als der bedienelementspezifische Datensatz. Dies ermöglicht eine rasche Inbetriebnahme der Bremsanlage und des Bedienelements. Vorzugweise beträgt die Datenmenge der Kennung höchstens 10 %, höchstens 5 % oder höchstens 1 % Prozent der Datenmenge des bedienelementspezifischen Datensatzes. Bevorzugt besteht die Kennung höchstens aus wenigen Bits, insbesondere höchstens 16 Bit, höchstens 8 Bit oder höchstens 4 Bit. Das Übertragen der Kennung und/oder des bedienelementspezifischen Datensatzes an das Steuergerät erfolgt beispielsweise über einen Datenbus, insbesondere über einen SENT-Bus, vorzugsweise über dessen Slow Channel.

In einer bevorzugten Ausführungsform ist zudem vorgesehen, dass in dem Steuergerät mehrere generische Datensätze hinterlegt sind. Jeder dieser generischen Datensätze ist einer von mehreren unterschiedlichen Werten der Kennung zugeordnet. Nach dem Übertragen der in dem Bedienelement hinterlegten Kennung an das Steuergerät wird insoweit überprüft, ob für die übertragene Kennung beziehungsweise ihren Wert ein generischer Datensatz hinterlegt ist. Ist dies der Fall, so ist die Kompatibilitätsprüfung erfolgreich und das Einrichten des Bedienelements wird vorgenommen. Hierbei wird der in dem Steuergerät hinterlegte generische Datensatz, welcher der übertragenen Kennung zugeordnet ist, als Kalibrierdatensatz herangezogen und weiter wie bereits beschrieben verfahren.

Die beschriebene Vorgehensweise ermöglicht eine rasche Inbetriebnahme der Bremsanlage sowie ein zuverlässiges Betreiben. Insbesondere wird bereits zeitnah nach dem Verbauen des Bedienelements die erwartete Funktionalität der Bremsanlage hergestellt, nämlich auf Grundlage des generischen Datensatzes.

Eine Weiterbildung der Erfindung sieht vor, dass das ein in dem Bedienelement hinterlegtes Kennzeichen an das Steuergerät übertragen und dort mit einem hinterlegten Kennzeichen verglichen wird, wobei bei einem Unterschied zwischen dem übertragenen Kennzeichen und dem in dem Steuergerät hinterlegten Kennzeichen das Einrichten des Bedienelements vorgenommen wird. Das Kennzeichen ist zusätzlich zu der Kennung in dem Bedienelement hinterlegt.

Das Kennzeichen kann bedienelementspezifisch sein und hierbei beispielsweise als Seriennummer des Bedienelements vorliegen. Bei dem Herstellen mehrerer Bedienelemente werden diesen bevorzugt unterschiedliche Seriennummern zugeordnet, sodass eine eindeutige Zuordnung des Bedienelements erfolgen kann. Das Kennzeichen kann jedoch auch für mehrere der Steuergeräte identisch sein, insbesondere für lediglich einen Teil der Steuergeräte, und hierbei beispielsweise als Teilenummer vorliegen. Unterschiedlich ausgestaltete Bedienelemente verfügen über unterschiedliche Teilenummern, während die Teilenummern identischer Bedienelemente ebenfalls identisch sind.

Das Kennzeichen ermöglicht der Bremsanlage ein einfaches Feststellen, ob ein Austausch des Bedienelements vorgenommen wurde. Hierzu wird das in dem Bedienelement hinterlegte Kennzeichen an das Steuergerät übertragen. Dort wird es mit dem hinterlegten Kennzeichen verglichen. Unterscheidet sich das übertragene Kennzeichen von dem hinterlegten Kennzeichen, so wird davon ausgegangen, dass das Bedienelement ausgetauscht wurde. In diesem Fall, bevorzugt nur in diesem Fall, wird das Einrichten des Bedienelements vorgenommen.

Besonders bevorzugt wird nur bei dem Unterschied zwischen dem übertragenen Kennzeichen und dem in dem Steuergerät hinterlegten Kennzeichen die in dem Bedienelement hinterlegte Kennung an das Steuergerät übertragen und dort für die Kompatibilitätsprüfung herangezogen. Das bedeutet, dass die Kompatibilitätsprüfung lediglich dann vorgenommen wird, wenn sich das übertragene Kennzeichen von dem in dem Steuergerät hinterlegten Kennzeichen unterscheidet. Entspricht das übertragene Kennzeichen dem in dem Steuergerät hinterlegten Kennzeichen, so unterbleibt das Einrichten des Bedienelements und/oder das Durchführen der Kompatibilitätsprüfung und/oder das Übertragen der Kennung.

Das Kennzeichen weist bevorzugt nur eine kleine Datenmenge auf, beispielsweise ist seine Datenmenge höchstens so groß wie die Datenmenge der Kennung oder um einen Faktor von höchstens 2, höchstens 4 oder höchstens 8 größer als die Datenmenge der Kennung. Eine solche Vorgehensweise ermöglicht ein effizientes Prüfen auf einen Austausch des Bedienelements. Vorzugsweise wird nach dem Einrichten, insbesondere unmittelbar nach dem Übertragen des bedienelementspezifischen Datensatzes an das Steuergerät, das übertragene Kennzeichen in dem Steuergerät hinterlegt und nachfolgend für das Vergleichen mit dem übertragenen Kennzeichen herangezogen.

Eine Weiterbildung der Erfindung sieht vor, dass das Verwenden des bedienelementspezifischen Datensatzes erfolgt, indem der Kalibrierdatensatz mit dem bedienelementspezifischen Datensatz überschrieben oder von dem Kalibrierdatensatz auf den bedienelementspezifischen Datensatz umgeschaltet wird. Im Rahmen des Überschreibens wird der bedienelementspezifische Datensatz in einen Speicherbereich des Datenspeichers des Steuergeräts geschrieben, in welchem der Kalibrierdatensatz bereits vorliegt. Anderenfalls liegen nach dem Übertragen der Kalibrierdatensatz und der bedienelementspezifische Datensatz an unterschiedlichen Adressbereichen des Datenspeichers vor und es wird von dem Adressbereich des Kalibrierdatensatzes auf den Adressbereich des bedienelementspezifischen Datensatzes umgeschaltet, um nachfolgend den bedienelementspezifischen Datensatz als Kalibrierdatensatz zu verwenden. Eine solche Vorgehensweisen ermöglicht ein effizientes Einbinden des bedienelementspezifischen Datensatzes.

Eine Weiterbildung der Erfindung sieht vor, dass während der Kompatibilitätsprüfung und/oder während des Einrichtens ein Warnsignal erzeugt wird. Das Warnsignal dient dazu, dem Fahrer des Kraftfahrzeugs und/oder einer von der Bremsanlage verschiedenen Einrichtung des Kraftfahrzeugs anzuzeigen, dass die Bremsanlage unter Umständen nicht vollständig funktionsfähig ist, sondern mit Einschränkungen der Funktionsfähigkeit gerechnet werden muss. Das Erzeugen des Warnsignals dient einem sicheren Betreiben der Bremsanlage beziehungsweise des Kraftfahrzeugs.

Eine Weiterbildung der Erfindung sieht vor, dass bei fehlgeschlagener Kompatibilitätsprüfung ein Fehlersignal erzeugt und/oder ein Anlernen des Bedienelements durchgeführt wird. Schlägt die Kompatibilitätsprüfung fehl, so steht fest, dass das Bedienelement nicht zuverlässig im Rahmen der Bremsanlage betrieben werden kann. Entsprechend wird das Fehlersignal erzeugt. Zusätzlich oder alternativ wird bei der fehlgeschlagenen Kompatibilitätsprüfung das Anlernen des Bedienelements vorgenommen. Unter dem Anlernen ist zu verstehen, dass der Kalibrierdatensatz in das Steuergerät eingeschrieben wird, beispielsweise von extern.

Bei dem Anlernen des Bedienelements erfolgt eine Parametrisierung des Steuergeräts derart, dass das Bedienelement zum Durchführen eines bestimmungsgemäßen Betriebs der Bremsanlage verwendbar ist. Das Einschreiben des Kalibrierdatensatzes in das Steuergerät erfolgt beispielsweise mittels einer lediglich temporär an das Steuergerät angeschlossenen Einrichtung, beispielsweise mittels eines Mobilgeräts. Die Einrichtung ist bevorzugt lediglich zeitweise an das Steuergerät angeschlossen, insbesondere über einen Datenbus. Vor einem Betriebsbeginn des Kraftfahrzeugs beziehungsweise der Bremsanlage wird die Verbindung zwischen der externen Einrichtung und dem Steuergerät unterbrochen.

Die beschriebene Vorgehensweise ermöglicht das Betreiben eines Bedienelements im Rahmen der Bremsanlage, für welches die Kompatibilitätsprüfung nicht erfolgreich ist. Hierfür ist jedoch ein größerer Aufwand notwendig als für ein Bedienelement, für welches die Kompatibilitätsprüfung erfolgreich vorgenommen werden kann.

Eine Weiterbildung der Erfindung sieht vor, dass das Warnsignal und/oder das Fehlersignal über einen bestimmten Zeitraum hinweg unterdrückt werden, insbesondere unmittelbar auf einen Betriebsbeginn der Bremsanlage folgend. Das Unterdrücken des Warnsignals beziehungsweise des Fehlersignals hat zur Folge, dass das jeweilige Signal nach außen nicht sichtbar ist. Das Steuergerät weist also nach außen denselben Zustand auf, als ob das Warnsignal beziehungsweise das Fehlersignal nicht erzeugt würde. Das Unterdrücken des Warnsignals und/oder des Fehlersignals erfolgt über den bestimmten Zeitraum hinweg, beispielsweise über mindestens 1 Sekunde und höchstens 30 Sekunden, mindestens 5 Sekunden und höchstens 20 Sekunden oder in etwa oder genau 10 Sekunden oder 15 Sekunden. Der Zeitraum beginnt vorzugsweise mit einem Betriebsbeginn der Bremsanlage, also sobald Spannung an der Klemme 15 des Kraftfahrzeugs anliegt. Hierdurch werden unnötige Warnmeldungen beziehungsweise Fehlermeldungen unterdrückt.

Eine Weiterbildung der Erfindung sieht vor, dass das Warnsignal und/oder das Fehlersignal mittels einer Anzeigeeinrichtung angezeigt werden. Die Anzeigeeinrichtung dient dem Anzeigen des Warnsignals beziehungsweise des Fehlersignals, vorzugsweise in einem Innenraum des Kraftfahrzeugs und/oder für den Fahrer des Kraftfahrzeugs. Die Anzeigeeinrichtung ist beispielsweise eine optische oder eine akustische Anzeigeeinrichtung. Insbesondere wird das Warnsignal mittels einer gelben Leuchte und das Fehlersignal mittels einer roten Leuchte signalisiert. Hierdurch ist eine zuverlässige Warnung vor einer möglichen Beeinträchtigung des Betriebs der Bremsanlage sichergestellt.

Eine Weiterbildung der Erfindung sieht vor, dass im Rahmen der Kompatibilitätsprüfung die Kennung als Eingangsgröße für ein Kennfeld oder eine Tabelle verwendet wird, die als Ausgangsgröße eine Kompatibilitätskenngröße aufweist, wobei die Kompatibilitätsprüfung bei einem ersten Wert der ermittelten Kompatibilitätskenngröße als erfolgreich und bei einem zweiten Wert als fehlgeschlagen eingestuft wird. Das Kennfeld beziehungsweise die Tabelle ist in dem Steuergerät hinterlegt. Die übertragene Kennung wird mithilfe des Kennfelds beziehungsweise der Tabelle ausgewertet; sie dient entsprechend als Eingangsgröße. Aus dem Kennfeld beziehungsweise der Tabelle resultiert die Kompatibilitätskenngröße als Ausgangsgröße. Die Kompatibilitätskenngröße liegt insoweit als Funktion der Kennung vor und wird mithilfe des Kennfelds beziehungsweise der Tabelle aus der Kennung ermittelt.

Vorzugsweise enthält das Kennfeld beziehungsweise die Tabelle lediglich zwei unterschiedliche Werte für die Kompatibilitätskenngröße, nämlich den ersten Wert und den zweiten Wert. Resultiert aus dem Kennfeld beziehungsweise der Tabelle unter Verwendung der Kennung als Eingangsgröße der erste Wert für die Kompatibilitätskenngröße, so wird davon ausgegangen, dass das Bedienelement kompatibel ist und die Kompatibilitätsprüfung ist entsprechend erfolgreich. Liegt hingegen der zweite Wert vor, so wird das Bedienelement als nicht kompatibel eingestuft und die Kompatibilitätsprüfung schlägt damit fehl. Dies ermöglicht eine einfache Prüfung der Kompatibilität des Bedienelements.

Eine Weiterbildung der Erfindung sieht vor, dass das Steuergerät ein erstes Steuergerät ist und zusätzlich zu dem ersten Steuergerät ein zweites Steuergerät vorliegt, das analog zu dem ersten Steuergerät betrieben wird. Das erste Steuergerät und das zweite Steuergerät sind redundant ausgestaltet beziehungsweise werden redundant betrieben, um eine hohe Zuverlässigkeit und Sicherheit der Bremsanlage sicherzustellen. Vorzugsweise ist es vorgesehen, dass das erste Steuergerät und das zweite Steuergerät separat voneinander an das Bedienelement angebunden sind und die Kennung an jedes der Steuergeräte von dem Bedienelement übertragen wird.

Auch die Kompatibilitätsprüfung wird in jedem der Steuergeräte separat vorgenommen. Lediglich wenn die Kompatibilitätsprüfung in jedem der Steuergeräte erfolgreich ist, wird das Betreiben des Bedienelements unter Verwendung des bedienelementspezifischen Datensatzes als Kalibrierdatensatz zugelassen. Vorzugsweise wird anderenfalls das Fehlersignal erzeugt. Bevorzugt weist das Bedienelement mehrere redundante Sensoren auf, wobei die Steuergeräte an unterschiedliche dieser redundanten Sensoren des Bedienelements angeschlossen sind. Die redundanten Sensoren dienen jeweils der Erfassung der Einstellung des Bedienelements, also beispielsweise der Stellung des Bedienelements. Hierdurch wird die bereits erwähnte Zuverlässigkeit der Bremsanlage erzielt.

Die Erfindung betrifft weiterhin eine Bremsanlage für ein Kraftfahrzeug, insbesondere zur Durchführung eines Verfahrens gemäß den Ausführungen im Rahmen dieser Beschreibung, wobei die Bremsanlage eine Betriebsbremseinrichtung aufweist und ein Ansteuern der Betriebsbremseinrichtung zum Erzeugen einer Bremskraft auf eine Radachse des Kraftfahrzeugs zumindest zeitweise in Abhängigkeit von einer Einstellung eines Bedienelements erfolgt. Dabei ist die Bremsanlage dazu vorgesehen und ausgestaltet, das Erzeugen der Bremskraft in Abhängigkeit von der Einstellung des Bedienelements unter Verwendung eines in einem Steuergerät der Bremsanlage hinterlegten Kalibrierdatensatzes vorzunehmen, wobei eine in dem Bedienelement hinterlegte Kennung an das Steuergerät übertragen und dort für eine Kompatibilitätsprüfung herangezogen wird und bei erfolgreicher Kompatibilitätsprüfung ein Einrichten des Bedienelements erfolgt, indem ein in dem Steuergerät hinterlegter generischer Datensatz als Kalibrierdatensatz verwendet sowie ein in dem Bedienelement hinterlegter bedienelementspezifischer Datensatz an das Steuergerät übertragen und nach dem Übertragen als Kalibrierdatensatz verwendet wird.

Auf die Vorteile einer derartigen Vorgehensweise beziehungsweise einer derartigen Ausgestaltung der Bremsanlage wurde bereits hingewiesen. Sowohl die Bremsanlage als auch das Verfahren zu ihrem Betreiben können gemäß den Ausführungen im Rahmen dieser Beschreibung weitergebildet sein, sodass insoweit auf diese verwiesen wird.

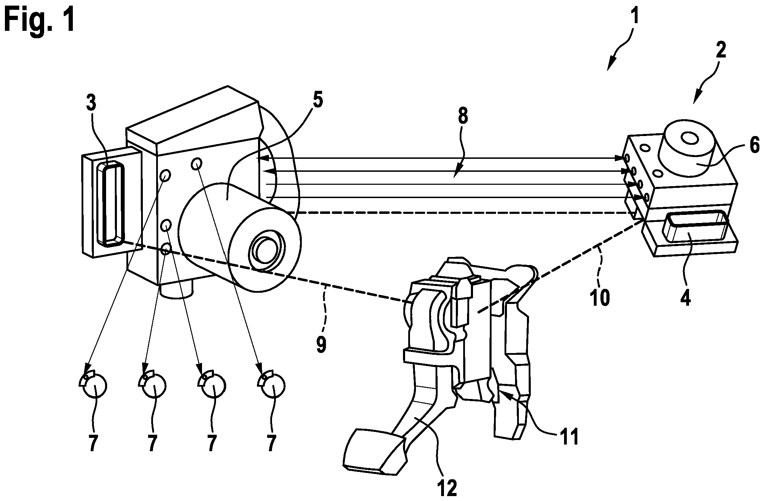

Die Erfindung wird nachfolgend anhand der in den Zeichnungen dargestellten Ausführungsbeispiele näher erläutert, ohne dass eine Beschränkung der Erfindung erfolgt. Dabei zeigt die einzige
- Figur 1: eine schematische Darstellung einer Bremsanlage für ein Kraftfahrzeug.

Die Figur 1 zeigt eine äußerst schematische Darstellung einer Bremsanlage 1 für ein Kraftfahrzeug. Die Bremsanlage 1 verfügt über eine Betriebsbremseinrichtung 2, die wiederum ein erstes Steuergerät 3 und ein zweites Steuergerät 4 aufweist. Die Steuergeräte 3 und 4 sind jeweils an einen Bremsaktuator 5 beziehungsweise 6 angebunden, mittels welchem Radbremsen 7 zum Erzeugen einer Bremskraft auf ein Rad beziehungsweise eine Radachse des Kraftfahrzeugs angesteuert werden können. Die Steuergeräte 3 und 4 sind untereinander über einen Datenbus 8 miteinander verbunden. Sie kommunizieren über den Datenbus 8 zur Realisierung eines redundanten Betriebs. Entsprechend wird eine hohe Betriebssicherheit der Bremsanlage 1 erzielt.

Die Steuergeräte 3 und 4 sind über weitere Datenbusse 9 und 10 an ein Bedienelement 11 angebunden, insbesondere rein elektrisch. Das Bedienelement 11 liegt in dem hier dargestellten Ausführungsbeispiel als Bremspedal vor. Es verfügt über ein Fußpedal 12, mittels welchem ein Fahrer des Kraftfahrzeugs eine Bremskraft vorgeben kann. Diese vorgegebene Bremskraft kann auch als Vorgabebremskraft bezeichnet werden. Die Vorgabebremskraft wird erst in dem Steuergerät 3 beziehungsweise 4 ermittelt. Über den Datenbus 9 beziehungsweise 10 wird insoweit zunächst eine Einstellung des Bedienelements 11 übertragen, beispielsweise eine Stellung des Bedienelements 11 beziehungsweise des Fußpedals 12. Aus dieser Stellung wird in dem Steuergerät 3 beziehungsweise 4 unter Verwendung eines Kalibrierdatensatzes die Vorgabebremskraft ermittelt und der jeweilige Bremsaktuator 5 beziehungsweise 6 und mithin die Radbremsen 7 zum Erzielen einer der Vorgabebremskraft entsprechenden Istbremskraft angesteuert.

Der Kalibrierdatensatz ist in dem jeweiligen Steuergerät 3 beziehungsweise 4 hinterlegt. Er ist auf das jeweilige Bedienelement 11 abgestimmt. Bei einer ersten Inbetriebnahme des Bedienelements 11 wird ein in dem Bedienelement 11 hinterlegter bedienelementspezifischer Datensatz an das Steuergerät 3 beziehungsweise 4 übermittelt und nach dem Übertragen als Kalibrierdatensatz herangezogen. Um bereits vor dem vollständigen Übertragen des bedienelementspezifischen Datensatzes an das Steuergerät 3 beziehungsweise 4 einen zuverlässigen und sicheren Betrieb der Bremsanlage 1 zu ermöglichen, wird vor dem Übertragen des bedienelementspezifischen Datensatzes eine in dem Bedienelement 11 ebenfalls hinterlegte Kennung an das Steuergerät 3 beziehungsweise 4 übertragen. Anhand der Kennung führt das Steuergerät 3 beziehungsweise 4 eine Kompatibilitätsprüfung durch.

Ergibt sich bei der Kompatibilitätsprüfung, dass das Bedienelement 11 mit der Bremsanlage 1 kompatibel ist, so ist die Kompatibilitätsprüfung erfolgreich und das Bedienelement wird eingerichtet. Das Einrichten des Bedienelements 11 umfasst das Übertragen des bedienelementspezifischen Datensatzes an das Steuergerät 3 beziehungsweise 4. Nach dem vollständigen Übertragen wird der bedienelementspezifische Datensatz als Kalibrierdatensatz verwendet. Bis zu dem vollständigen übertragen, also bis zu dem Abschluss der Übertragung, wird hingegen ein generischer Datensatz als Kalibrierdatensatz herangezogen. Der generischer Datensatz ist derart ausgelegt, dass er für für eine Mehrzahl von Bedienelement 11 jeweils ein zuverlässiges und zutreffendes Ermitteln der Vorgabebremskraft aus der Einstellung des jeweiligen Bedienelements 11 ermöglicht.

Wird anhand der an das Steuergerät 3 beziehungsweise 4 übertragenen Kennung festgestellt, dass das Bedienelement 11 nicht kompatibel ist, so wird ein Fehlersignal erzeugt. Zusätzlich oder alternativ wird ein Anlernen des Bedienelements vorgenommen, in dessen Rahmen der Kalibrierdatensatz in dem Steuergerät 3 beziehungsweise 4 hinterlegt wird, insbesondere durch Übertragung von einer externen Einrichtung. Diese kann zum Beispiel im Rahmen einer Wartung des Kraftfahrzeugs beziehungsweise eines Werkstattaufenthalts erfolgen. Durch die beschriebene Vorgehensweise ist in jedem Fall ein sicherer und zuverlässiger Betrieb der Bremsanlage 1 gewährleistet.

### BEZUGSZEICHENLISTE:

- 1: Bremsanlage
- 2: Betriebsbremseinrichtung
- 3: erstes Steuergerät
- 4: zweites Steuergerät
- 5: Bremsaktuator
- 6: Bremsaktuator
- 7: Radbremse
- 8: Datenbus
- 9: Datenbus
- 10: Datenbus
- 11: Bedienelement
- 12: Fußpedal

## Patentansprüche

1. Verfahren zum Betreiben einer Bremsanlage (1) für ein Kraftfahrzeug, wobei die Bremsanlage (1) eine Betriebsbremseinrichtung (2) aufweist und ein Ansteuern der Betriebsbremseinrichtung (2) zum Erzeugen einer Bremskraft auf eine Radachse des Kraftfahrzeugs zumindest zeitweise in Abhängigkeit von einer Einstellung eines Bedienelements (11) erfolgt, **dadurch gekennzeichnet, dass** das Erzeugen der Bremskraft in Abhängigkeit von der Einstellung des Bedienelements (11) unter Verwendung eines in einem Steuergerät (3) der Bremsanlage (1) hinterlegten Kalibrierdatensatzes vorgenommen wird, wobei eine in dem Bedienelement (11) hinterlegte Kennung an das Steuergerät (3) übertragen und dort für eine Kompatibilitätsprüfung herangezogen wird und bei erfolgreicher Kompatibilitätsprüfung ein Einrichten des Bedienelements (11) erfolgt, indem ein in dem Steuergerät (3) hinterlegter generischer Datensatz als Kalibrierdatensatz verwendet sowie ein in dem Bedienelement (11) hinterlegter bedienelementspezifischer Datensatz an das Steuergerät (3) übertragen und nach dem Übertragen als Kalibrierdatensatz verwendet wird.

2. Verfahren nach Anspruch 1, **dadurch gekennzeichnet, dass** ein in dem Bedienelement (11) hinterlegtes Kennzeichen an das Steuergerät (3) übertragen und dort mit einem hinterlegten Kennzeichen verglichen wird, wobei bei einem Unterschied zwischen dem übertragenen Kennzeichen und dem in dem Steuergerät (3) hinterlegten Kennzeichen das Einrichten des Bedienelements (11) vorgenommen wird.

3. Verfahren nach einem der vorhergehenden Ansprüche, **dadurch gekennzeichnet, dass** das Verwenden des bedienelementspezifischen Datensatzes erfolgt, indem der Kalibrierdatensatz mit dem bedienelementspezifischen Datensatz überschrieben oder von dem Kalibrierdatensatz auf den bedienelementspezifischen Datensatz umgeschaltet wird.

4. Verfahren nach einem der vorhergehenden Ansprüche, **dadurch gekennzeichnet, dass** während der Kompatibilitätsprüfung und/oder während des Einrichtens ein Warnsignal erzeugt wird.

5. Verfahren nach einem der vorhergehenden Ansprüche, **dadurch gekennzeichnet, dass** bei fehlgeschlagener Kompatibilitätsprüfung ein Fehlersignal erzeugt und/oder ein Anlernen des Bedienelements (11) durchgeführt wird.

6. Verfahren nach einem der Ansprüche 4 und 5, **dadurch gekennzeichnet, dass** das Warnsignal und/oder das Fehlersignal über einen bestimmten Zeitraum hinweg unterdrückt werden.

7. Verfahren nach einem der Ansprüche 4 und 5, **dadurch gekennzeichnet, dass** das Warnsignal und/oder das Fehlersignal mittels einer Anzeigeeinrichtung angezeigt werden.

8. Verfahren nach einem der vorhergehenden Ansprüche, **dadurch gekennzeichnet, dass** im Rahmen der Kompatibilitätsprüfung die Kennung als Eingangsgröße für ein Kennfeld oder eine Tabelle verwendet wird, die als Ausgangsgröße eine Kompatibilitätskenngröße aufweist, wobei die Kompatibilitätsprüfung bei einem ersten Wert der ermittelten Kompatibilitätskenngröße als erfolgreich und bei einem zweiten Wert als fehlgeschlagen eingestuft wird.

9. Verfahren nach einem der vorhergehenden Ansprüche, **dadurch gekennzeichnet, dass** das Steuergerät (3) ein erstes Steuergerät (3) ist und zusätzlich zu dem ersten Steuergerät (3) ein zweites Steuergerät (4) vorliegt, das analog zu dem ersten Steuergerät (3) betrieben wird.

10. Bremsanlage (1) für ein Kraftfahrzeug, insbesondere zur Durchführung des Verfahrens nach einem oder mehreren der vorhergehenden Ansprüche, wobei die Bremsanlage (1) eine Betriebsbremseinrichtung (2) aufweist und ein Ansteuern der Betriebsbremseinrichtung (2) zum Erzeugen einer Bremskraft auf eine Radachse des Kraftfahrzeugs zumindest zeitweise in Abhängigkeit von einer Einstellung eines Bedienelements (11) erfolgt, **dadurch gekennzeichnet, dass** die Bremsanlage (1) dazu vorgesehen und ausgestaltet ist, das Erzeugen der Bremskraft in Abhängigkeit von der Einstellung des Bedienelements (11) unter Verwendung eines in einem Steuergerät (3) der Bremsanlage (1) hinterlegten Kalibrierdatensatzes vorzunehmen, wobei eine in dem Bedienelement (11) hinterlegte Kennung an das Steuergerät (3) übertragen und dort für eine Kompatibilitätsprüfung herangezogen wird und bei erfolgreicher Kompatibilitätsprüfung ein Einrichten des Bedienelements (11) erfolgt, indem ein in dem Steuergerät (3) hinterlegter generischer Datensatz als Kalibrierdatensatz verwendet sowie ein in dem Bedienelement (11) hinterlegter bedienelementspezifischer Datensatz an das Steuergerät (3) übertragen und nach dem Übertragen als Kalibrierdatensatz verwendet wird.

## Claims

1. Method for operating a brake system (1) for a motor vehicle, wherein the brake system (1) has a service brake device (2) and a control for the service brake device (2) for generating a braking force on a wheel axle of the motor vehicle, performed at least temporarily as a function of an adjustment of a control element (11), **characterized in that** the generation of the braking force as a function of the adjustment of the control element (11) is performed using a calibration data set stored in a control device (3) of the brake system (1), wherein an identifier stored in the control element (11) is transmitted to the control device (3) and is used there for a compatibility check and, in the case of a successful compatibility check, setup of the control element (11) is performed by a generic data set stored in the control device (3) being used as a calibration data set, as well as a control element-specific data set stored in the control element (11) being transmitted to the control device (3) and being used as a calibration data set after transmission.

2. Method according to claim 1, **characterized in that** an identifier stored in the control element (11) is transmitted to the control device (3) and is compared there with a stored identifier, wherein, in the case of a difference between the transmitted identifier and the identifier stored in the control device (3), setup of the control element (11) is performed.

3. Method according to any of the preceding claims, **characterized in that** use of the control element-specific data set is performed by the calibration data set being overwritten with the control element-specific data set or being switched from the calibration data set to the control element-specific data set.

4. Method according to any of the preceding claims, **characterized in that** a warning signal is generated during the compatibility check and/or during setup.

5. Method according to any of the preceding claims, **characterized in that** in the case of a failed compatibility check, an error signal is generated and/or learning of the control element (11) is performed.

6. Method according to any one of claims 4 and 5, **characterized in that** the warning signal and/or the error signal are disabled for a certain period of time.

7. Method according to any one of claims 4 and 5, **characterized in that** the warning signal and/or the error signal are displayed by means of a display device.

8. Method according to any of the preceding claims, **characterized in that,** as part of the compatibility check, the identifier is used as an input variable for a characteristic diagram or a table, which has a compatibility parameter as an output variable, wherein the compatibility check is considered successful with a first value of the determined compatibility parameter and failed with a second value.

9. Method according to any of the preceding claims, **characterized in that** the control device (3) is a first control device (3) and, in addition to the first control device (3), there is a second control device (4), which is operated in the same way as the first control device (3).

10. Brake system (1) for a motor vehicle, in particular for implementing the method according to one or more of the preceding claims, wherein the brake system (1) has a service brake device (2) and a control for the service brake device (2) for generating a braking force on a wheel axle of the motor vehicle, performed at least temporarily as a function of an adjustment of a control element (11), **characterized in that** the brake system (1) is provided and designed to perform the generation of the braking force as a function of the adjustment of the control element (11) using a calibration data set stored in a control device (3) of the brake system (1), wherein an identifier stored in the control element (11) is transmitted to the control device (3) and used there for a compatibility check and, in the case of a successful compatibility check, setup of the control element (11) is performed by a generic data set stored in the control device (3) being used as a calibration data set, as well as a control element-specific data set stored in the control element (11) being transmitted to the control device (3) and being used as a calibration data set after transmission.

## Revendications

1. Procédé de fonctionnement d'une installation de freinage (1) pour un véhicule automobile, dans lequel l'installation de freinage (1) présente un appareil de freinage de service (2) et une commande de l'appareil de freinage de service (2) pour générer une force de freinage sur un axe de roue du véhicule automobile s'effectue au moins temporairement en fonction d'un réglage d'un élément de commande (11), **caractérisé en ce que** la génération de la force de freinage est réalisée en fonction du réglage de l'élément de commande (11) en utilisant un jeu de données d'étalonnage enregistré dans un dispositif de commande (3) de l'installation de freinage (1), dans lequel un identifiant enregistré dans l'élément de commande (11) est transmis au dispositif de commande (3) et y est utilisé pour un contrôle de compatibilité et, en cas de contrôle de compatibilité réussi, une configuration de l'élément de commande (11) s'effectue en utilisant un jeu de données générique enregistré dans le dispositif de commande (3) en tant que jeu de données d'étalonnage ainsi qu'en transmettant au dispositif de commande (3) un jeu de données spécifique à l'élément de commande enregistré dans l'élément de commande (11) et en l'utilisant après la transmission en tant que jeu de données d'étalonnage.

2. Procédé selon la revendication 1, **caractérisé en ce qu'**une caractéristique enregistrée dans l'élément de commande (11) est transmise au dispositif de commande (3) et y est comparée à une caractéristique enregistrée, dans lequel la configuration de l'élément de commande (11) est réalisée en cas de différence entre la caractéristique transmise et la caractéristique enregistrée dans le dispositif de commande (3).

3. Procédé selon l'une quelconque des revendications précédentes, **caractérisé en ce que** l'utilisation du jeu de données spécifique à l'élément de commande s'effectue en écrasant le jeu de données d'étalonnage avec le jeu de données spécifique à l'élément de commande ou en passant du jeu de données d'étalonnage au jeu de données spécifique à l'élément de commande.

4. Procédé selon l'une quelconque des revendications précédentes, **caractérisé en ce qu'**un signal d'avertissement est généré pendant le contrôle de compatibilité et/ou pendant la configuration.

5. Procédé selon l'une quelconque des revendications précédentes, **caractérisé en ce que,** en cas d'échec du contrôle de compatibilité, un signal d'erreur est généré et/ou un apprentissage de l'élément de commande (11) est effectué.

6. Procédé selon l'une quelconque des revendications 4 et 5, **caractérisé en ce que** le signal d'avertissement et/ou le signal d'erreur sont désactivés pendant une certaine période.

7. Procédé selon l'une quelconque des revendications 4 et 5, **caractérisé en ce que** le signal d'avertissement et/ou le signal d'erreur sont affichés au moyen d'un appareil d'affichage.

8. Procédé selon l'une quelconque des revendications précédentes, **caractérisé en ce que,** dans le cadre du contrôle de compatibilité, l'identifiant est utilisé en tant que grandeur d'entrée pour un diagramme caractéristique ou un tableau qui présente en tant que grandeur de sortie un paramètre de compatibilité, dans lequel le contrôle de compatibilité est considéré comme réussi pour une première valeur du paramètre de compatibilité déterminé et comme échoué pour une deuxième valeur.

9. Procédé selon l'une quelconque des revendications précédentes, **caractérisé en ce que** le dispositif de commande (3) est un premier dispositif de commande (3) et, en plus du premier dispositif de commande (3), un second appareil de commande (4), qui fonctionne de la même manière que le premier dispositif de commande (3) est présent.

10. Installation de freinage (1) pour un véhicule automobile, en particulier pour la mise en œuvre du procédé selon une ou plusieurs des revendications précédentes, dans lequel l'installation de freinage (1) présente un appareil de freinage de service (2) et une commande de l'appareil de freinage de service (2) pour générer une force de freinage sur un axe de roue du véhicule automobile s'effectue au moins temporairement en fonction d'un réglage d'un élément de commande (11), **caractérisé en ce que** l'installation de freinage (1) est prévue et conçue pour réaliser la génération de la force de freinage en fonction du réglage de l'élément de commande (11) en utilisant un jeu de données d'étalonnage enregistré dans un dispositif de commande (3) de l'installation de freinage (1), dans lequel un identifiant enregistré dans l'élément de commande (11) est transmis au dispositif de commande (3) et y est utilisé pour un contrôle de compatibilité et, en cas de contrôle de compatibilité réussi, une configuration de l'élément de commande (11) s'effectue en utilisant un jeu de données générique enregistré dans le dispositif de commande (3) en tant que jeu de données d'étalonnage ainsi qu'en transmettant au dispositif de commande (3) un jeu de données spécifique à l'élément de commande enregistré dans l'élément de commande (11) et en l'utilisant après la transmission en tant que jeu de données d'étalonnage.
